(19) Europäisches Patentamt
European Patent Office
Office européen des brevets

(11) EP 1 426 753 B1

(12) **EUROPÄISCHE PATENTSCHRIFT**

(45) Veröffentlichungstag und Bekanntmachung des Hinweises auf die Patenterteilung:
**23.11.2011  Patentblatt 2011/47**

(51) Int Cl.:
*G01N 11/10* *(2006.01)*   *G01N 11/04* *(2006.01)*
*B29C 45/02* *(2006.01)*

(21) Anmeldenummer: **03020434.1**

(22) Anmeldetag: **11.09.2003**

(54) **Rheometer**

Rheometer

Rhéomètre

(84) Benannte Vertragsstaaten:
**AT BE BG CH CY CZ DE DK EE ES FI FR GB GR HU IE IT LI LU MC NL PT RO SE SI SK TR**

(30) Priorität: **28.11.2002  DE 10255466**

(43) Veröffentlichungstag der Anmeldung:
**09.06.2004  Patentblatt 2004/24**

(73) Patentinhaber: **ROBERT BOSCH GMBH**
**70442 Stuttgart (DE)**

(72) Erfinder: **Aichele, Wilfried**
**71364 Winnenden (DE)**

(56) Entgegenhaltungen:
**GB-A- 1 496 414   GB-A- 2 283 100**
**US-A- 3 270 553   US-A- 4 574 622**
**US-A- 5 417 106   US-A- 5 569 843**
**US-A- 5 717 131**

• **PATENT ABSTRACTS OF JAPAN Bd. 011, Nr. 253 (P-606), 18. August 1987 (1987-08-18) & JP 62 059838 A (KOBE STEEL LTD), 16. März 1987 (1987-03-16)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Rheometer nach dem Oberbegriff des Anspruchs 1.

Stand der Technik

Rheometer kommen in vielen verschiedenen chemischen und materialverarbeitenden Industriezweigen zum Einsatz, wie z.B. in den Bereichen Pharmazeutik, Lebensmittelverarbeitung, Agrikulturchemie, Farben- und Pigmentherstellung, Papierherstellung, Katalysatoren, Keramik und Kosmetik, um Eigenschaften wie Fließeigenschaften von Materialien wie Pulver, Flüssigkeiten und halbfesten Stoffen wie Pasten, Gele, Salben und dergleichen zu bestimmen und zu vergleichen. Diese Materialien verbinden im allgemeinen die Eigenschaften einer viskosen Flüssigkeit und eines elastischen Feststoffs, d.h., sie sind viskoelastisch. Die Reaktion solcher Materialien auf mechanische Kräfte ist für ihre ordnungsgemäße Herstellung und ihren ordnungsgemäßen Gebrauch wichtig, und folglich ist die Rheometrie ein wichtiges Instrument für ihre Entwicklung, Produktion und Qualitätskontrolle.

Die schriften US-A-3270553 und RU-C1-2157 321 beschreiben herkömmliche Rheometer. So arbeitet bspw. das Verfahren des Transfer Molding (TM mit zylinderförmigen Tabletten aus schmelz- und härtbaren Duroplastmassen. Diese werden in die zylindrischen Spritzkolbenkammern des geöffneten heißen TM-Werkzeugs überführt, das Werkzeug durch die Schließeinheit der TM-Presse geschlossen und die aufgeschmolzene Masse durch die Spritzkolben aus den Kammern über Angusskanäle in die eigentlichen Formkavitäten gedrückt. Während der Bewegung der Spritzkolben laufen sich teilweise zeitlich überschneidende Vorgänge ab:

Erwärmen und Aufschmelzen der Tablette; Fließen der Schmelze und weitere Erwärmung in Spritzkolbenkammer, Angusssystem und Kavität und Aushärtung der Masse.

Das TM-Verfahren ist bei der Herstellung von elektronischen Komponenten, wie beispielsweise zur Umhüllung von ICs, weit verbreitet. Seine Wirtschaftlichkeit beruht einerseits auf der Verwendung von sogenannten Mehrkolben-TM-Pressen (Multiplunger-Pressen), welche die Anordnung von mehreren Spritzkolbenkammern und Kavitäten auf engem Raum innerhalb eines Werkzeugs gestatten, und andererseits auf dem Einsatz von reaktiven, rasch härtenden Massen. Diese härten bereits bei Raumtemperatur merklich und müssen deshalb vor der Verarbeitung kühl gelagert werden. Durch die kurze Verweildauer in der heißen Spritzkolbenkammer können die Masserezepturen bei der entsprechenden Werkzeugtemperatur sehr reaktiv formuliert werden. Dies ermöglicht eine entsprechend kurze Zykluszeit in der TM-Presse.

Eine isotherme rheologische Charakterisierung derartiger Massen mit Hilfe von Rheometern ist bei den für ihre Verarbeitung relevanten Temperaturen nahe der Werkzeugtemperatur nicht möglich, da bereits beim Aufheizen der Massen eine viskositätserhöhende Härtungsreaktion einsetzt. Weiterhin durchlaufen die Massen einen sehr dünnflüssigen Übergangsbereich mit Viskositäten bis zu 1 Pa * s herab. Werden beispielsweise in einem Kapillarrheometer derartige Schmelzen durch einen Kolben in einem Zylinder mit Druck beaufschlagt, so dringen sie in den dünnen Spalt zwischen Zylinderwand und Stempel ein. Die für das Fließen der Massen durch die Kapillare erforderlichen Kräfte auf den Kolben sind oft gegenüber den (stark streuenden) Reibungskräften zwischen Kolben und Zylinderwand vernachlässigbar, so dass die für eine Bewegung des Kolbens erforderlichen Kräfte keinen Rückschluss auf die Viskosität und das Härtungsverhalten der fließenden Masse zulassen.

Vorteile der Erfindung

Das Rheometer gemäß Anspruch 1 hat gegenüber dem Stand der Technik den Vorteil, dass sich die Geometrie des Rheometers und die Prüfparameter weitgehend an einen nachzubildenden Formgebungsprozess anpassen lassen. Ein weiterer Vorteil liegt darin, dass nur Strömungskräfte und keine Gleitreibungskräfte auftreten, und das erfindungsgemäße Rheometer daher auch für niedrigviskose Massen geeignet ist.

Vorteilhafte Weiterbildungen der Erfindung ergeben sich aus den in den Unteransprüchen genannten Maßnahmen.

Kurze Beschreibung der Zeichnungen

Ausführungsbeispiele der Erfindung sind in den Zeichnungen dargestellt und in der nachfolgenden Beschreibung näher erläutert. Es zeigen

Fig. 1 schematisch den Aufbau des erfindungsgemäßen Rheometers;

Fig. 2 schematisch die für die Berechnung der Viskosität notwendigen Parameter des erfindungsgemäßen Rheometers;

Fig. 3 die Auftragung der Kolbenkraft in Abhängigkeit von der Kolbenposition für den Fall einer zeitlich konstanten Viskosität; und

Fig. 4 die Auftragung der Viskosität in Abhängigkeit von der Zeit zur Charakterisierung des Fliess-Härtungsverhaltens einer Masse mit vier unterschiedlichen Vorvernetzungsgraden.

Ausführungsbeispiele

Die vorliegende Erfindung stellt eine einfache und preisgünstige Vorrichtung zur Charakterisierung des Fließ-Härtungsverhaltens von raschhärtenden Duroplastmassen, insbesondere beim Transfer-Molding-Prozess, zur Verfügung. Da die Masse nicht in den Bereich der Führung eindringen kann, gleiten Kolben und Hülse reibungsfrei aneinander. Die auf den Kolben aufgebrachte Kraft steht nur mit den hydrodynamischen Kräften einer definiert strömenden Masse im Gleichgewicht. Die Vorrichtung ist deshalb insbesondere geeignet für härtbare Massen mit niedrigem Viskositätsminimum, welches durch die bezüglich der Viskosität gegenläufigen Effekte von Erwärmung und Härtung bedingt ist. Es ist anzumerken, dass die Erfindung nicht auf Massen für den Transfer-Molding-Prozess (TM-Prozess) beschränkt ist, sondern zur rheologischen Charakterisierung aller härtbaren und nicht härtbaren Flüssigkeiten oder Schmelzen unter isothermen und nicht isothermen Bedingungen verwendet werden kann. Der Einfachheit halber wird sie jedoch im folgenden in Verbindung mit dem TM-Prozess erläutert.

Die Versuchsbedingungen für das Rheometer, wie Abmessung der Tablette, zeitlicher Temperaturverlauf der Masse, Kolbengeschwindigkeit und Höhe des Messspaltes können weitgehend an den jeweiligen Transfer-Molding-Prozess angepasst werden. Die Vorrichtung zeichnet sich aufgrund der taillierten Ausführung des Kolbens dadurch aus, dass keine Masse in die Führung des Kolbens gelangt. Da die Reibung zwischen Hülse und Kolben somit vernachlässigbar ist, ergibt sich die Viskosität der Masse zu jedem Zeitpunkt aus der Geschwindigkeit $v_s(t)$ der Kolbenbewegung und der auf den Kolben wirkenden Kraft $F(t)$.

Die Messung kann entweder durch Anlegen einer konstanten Kraft F auf den Kolben unter Registrierung der sich dabei einstellenden momentanen Stempelgeschwindigkeit $v_s$, oder durch eine geregelte, im Allgemeinen konstante Geschwindigkeit des Stempels $v_s(t)$ unter Registrierung der hierfür notwendigen momentanen Kraft $F(t)$ erfolgen. Steht eine handelsübliche Zugprüfmaschine zur Verfügung, so kann diese für beide Fahrweisen eingesetzt werden. Andernfalls genügt bei konstanter Last (Kraft) ein einfacher Wegaufnehmer zur Registrierung der Momentangeschwindigkeit des Kolbens oder, im anderen Falle, ein Antrieb für eine regelbare Kolbengeschwindigkeit in Verbindung mit einem Kraftsensor.

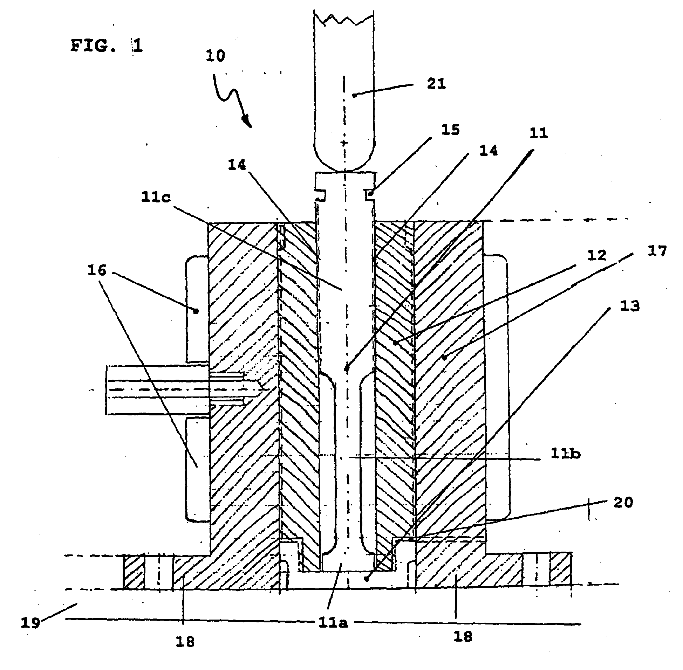

Fig. 1 zeigt schematisch den Aufbau eines erfindungsgemäßen Rheometers 10. Ein Kolben 11 läuft beweglich in einer Hülse 12, die ihrerseits einseitig mit einem Verschlussstück 13 verschlossen ist. In der dargestellten Ausführung wird das Verschlussstück 13 über ein Gewinde (nicht gezeigt) derart auf die Hülse 12 aufgeschraubt, dass die Stirnfläche der Hülse 12 und die dieser Stirnfläche zugewandte Innenfläche des Verschlussstücks 13 gegeneinander abdichten. Das endseitige Verschlussstück 13 der Hülse kann, wie für den Fachmann ersichtlich, konstruktiv auch auf andere Art und Weise ausgeführt sein.

Der Kolben 11 besteht aus verschiedenartig ausgebildeten Abschnitten 11a, 11b und 11c. Im Bereich der dem Verschlussstück 13 zugewandten Seite weist der Kolben 11 einen zylindrischen Abschnitt 11a auf. Zwischen diesem Bereich des Kolbens und dem Innendurchmesser der Hülse 12 verbleibt ein Ringspalt einer definierter Dicke h, welche der Höhe des Anschnitts im TM-Werkzeug entspricht. In Richtung auf die dem Verschlussstück 13 abgewandten Seite des Kolbens 11 schließt sich ein taillierter Abschnitt 11b an. Der dadurch zwischen Kolben und Hülse gebildete Raum nimmt als Reservoir die über den zylindrischen Abschnitt strömende Masse auf. In diesem Bereich ist also der Durchmesser des Kolbens 11 deutlich geringer als in den anderen Bereichen, so dass hier ein größerer Abstand zwischen dem Außendurchmesser des Kolbens 11 und dem Innendurchmesser der Hülse 12, in der der Kolben 11 läuft, vorliegt.

Auf der dem Verschlussstück 13 entgegengesetzten Seite der Taillierung geht der Kolben 11 wiederum in einen zylindrischen Abschnitt 11c über, welcher die Führung des Kolbens 11 in der Hülse 12 übernimmt. Der Durchmesser des zylindrischen Abschnitts 11c weist gegenüber dem Innendurchmesser der Hülse 12 ein sehr geringes Untermaß von ungefähr 0,02 mm auf, so dass der Kolben gerade reibungsfrei in der Hülse gleitet. Diese Gleitfläche des Kolbens 11 ist mit zwei axialen Entlüftungsnuten 14 und am oberen Ende mit einer Umfangsnut 15 versehen, in die ein gabelförmiges Werkzeug zum späteren Herausnehmen des erhitzten Kolbens 11 aus der Vorrichtung 10 eingeführt werden kann.

Zur Temperierung wird die Hülse 12 samt Verschlussstück 13 und Kolben 11 in die Innenbohrung eines über ein Heizband 16 beheizten Zylinders 17 eingeführt, dessen Flansch 18 auf einer beheizten Platte 19 befestigt ist. Die Temperatur von Zylinder 17 und Platte 19 entspricht dabei der des TM-Werkzeugs während des Formgebungsprozesses.

Ein durch eine Bohrung 20 des Zylinders 17 zwischen Hülse 12 und Verschlussstück 13 geführtes Thermoelement (nicht gezeigt) registriert die Temperatur der Hülse 12 in dem Bereich, in dem sich die später eingeführte Tablette aus Duroplastmaterial (nicht gezeigt) befinden wird.

Zur Messung der Fließeigenschaften wird nun die gesamte Vorrichtung 10 im zusammengebauten Zustand über die Platte 19 und das Heizband 16 auf die gewünschte Temperatur gebracht und die Höhe der dem Verschlussstück 13 abgewandten Fläche des Kolbens 11 als Bezugsposition "0" für den äußeren Antrieb über eine Antriebsstange 21 einer nicht gezeigten Antriebsvorrichtung (entsprechend einer Tablettenhöhe von 0) festgelegt. Die Höhe der einzuführenden zylindrischen Tablette aus dem härtbaren Duroplastmaterial wird ebenfalls gemessen und die Antriebsstange auf diese Höhe in ihre Startposition angehoben. Sodann wird die gesamte Vorrichtung seitlich gegenüber der Antriebsstange verschoben, die Tablette in einen Bogen Papier eingerollt, der Kolben 11 mit einem gabelförmigen Werkzeug aus thermisch isolierendem Werkstoff (ebenfalls nicht gezeigt), welches in die obere Umfangsnut 15 eingreift, aus der Hülse 12 gezogen, das Papierrohr mit der Tablette in die Hülse 12 gesteckt, die Tablette mit einem dünnen Stab gegen das Verschlussstück 13 gedrückt und das Papierrohr und anschließend der Stab aus der Hülse 12 herausgezogen. Man vermeidet dadurch, dass sich Material von der Tablette an der Innenbohrung der Hülse 12 im Bereich der Führung des Kolbens 11 festsetzt.

Anschließend wird mit dem gabelförmigen Werkzeug der erhitzte Kolben 11 in die Bohrung der Hülse 12 eingesetzt, die gesamte Vorrichtung durch Verschieben derart unter der Antriebsstange 21 positioniert, dass die Achsen von Stange und Kolben fluchten, und die Messung geschwindigkeits- oder kraftgeregelt gestartet, wobei die zeitliche Position s(t) des Kolbens 11 und im Falle der Geschwindigkeitsregelung zusätzlich der zeitliche Kraftverlauf F(t) registriert wird. Dabei strömt das aufgeschmolzene Material so lange über den Ringspalt zwischen dem Kolbenabschnitt 11a und der Hülse 12 in den Raum zwischen Hülse 12 und dem taillierten Kolbenabschnitt 11b, bis der Kolben 11 zum Stillstand kommt. Der Stillstand tritt ein, wenn a) entweder die gesamte Masse der Tablette über den Ringspalt geströmt, oder b) die Masse im Spalt so weit ausgehärtet ist, dass die (maximal zur Verfügung gestellte) Presskraft die Reibung nicht mehr überwinden kann. Da in vielen Fällen das Fließ-Härtungsverhalten verschiedener Massen miteinander verglichen werden soll, wird man die Belastung auf den Kolben 11 bzw. seine Geschwindigkeit so wählen, dass der letztere Fall eintritt.

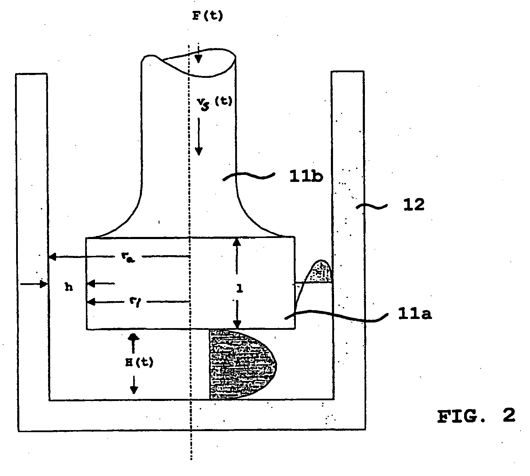

Unter Bezugnahme auf Fig. 2 lässt sich die Strömung im Rheometer unter der Voraussetzung von Wandhaftung, (d.h., die Strömungsgeschwindigkeit ist unmittelbar an Wandoberflächen relativ zu diesen Null) und unter Vernachlässigung von Einlauf- und Auslaufdruckverlusten an den Übergängen Scheibenbereich/Ringspalt beziehungsweise Ringspalt/Taillierung des Kolbens als Hintereinanderschaltung einer Pressströmung zwischen runden Scheiben (in der Literatur als sogenannter "Squeeze Flow" mit Dehn- und Scherströmungsanteilen bezeichnet) und einer reinen Scherströmung (als Überlagerung von Druck- und Schleppströmung) in einem Ringspalt der Länge 1, des Außendurchmessers $r_a$ und des Innendurchmessers $r_i$ beschreiben. Die Spalthöhe h stellt die Differenz $r_a - r_i$ dar.

Die Viskosität $\eta(t)$ der Masse errechnet sich bei Ansatz eines Newton'schen Fliessgesetzes in guter Näherung zu jedem Zeitpunkt t aus der auf den Stempel wirkenden Kraft F(t), dem Radius $r_i$ des Kolbens im Abschnitt 11a, dem Radius $r_a$ der Innenbohrung der Hülse 12, der Spaltlänge 1, der Spalthöhe h (= $r_a - r_i$), dem Abstand H(t) der Stirnfläche des Kolbens von der Innenfläche des Verschlussstücks 13 und der Geschwindigkeit $v_s(t)$ des Kolbens entsprechend

$$\eta(t) = \frac{F(t)}{2\pi v_s(t) l} * \frac{1}{K_1(t)}$$

wobei $K_1(t)$ eine zeitabhängige dimensionslose Funktion darstellt, welche sich durch

$$K_1(t) = \frac{1}{\ln\left(\frac{r_a}{r_i}\right) - \frac{(r_a^2 - r_i^2)}{(r_a^2 + r_i^2)}} + \frac{3}{4} * \left(\frac{r_i}{l}\right) * \left(\frac{r_i}{H(t)}\right)^3 * \left[1 + 2 * \left(\frac{H(t)}{r_i}\right)^2\right]$$

darstellen lässt. Der zweite Summand gibt den Beitrag des "Squeeze Flow" wieder. Bei kleinen Höhen h des Scherspaltes fällt der "Squeeze Flow" erst bei kleinen Schichtdicken H(t) (z.B. H < 0,5 mm) ins Gewicht. Dies lässt sich zeigen, indem man den Term

$$\frac{1}{\ln\left(\dfrac{r_a}{r_i}\right) - \dfrac{\left(r_a^{\ 2} - r_i^{\ 2}\right)}{\left(r_a^{\ 2} + r_i^{\ 2}\right)}}$$

in ein Polynom entwickelt. Bei Reihenabbruch im vierten Glied ergibt sich in guter Näherung

$$\eta(t) = \frac{F(t)}{6\pi v_s(t)l} * \left(\frac{h}{r_i^{\ 3}}\right)^3 * \frac{1}{K_2(t)}$$

mit

$$K_2(t) = 1 + \frac{3}{2} \bullet \left(\frac{h}{r_i}\right) + \frac{9}{10} \bullet \left(\frac{h}{r_i}\right)^2 + \frac{1}{5} \bullet \left(\frac{h}{r_i}\right)^3 + \frac{1}{4} \bullet \left(\frac{r_i}{l}\right) \bullet \left(\frac{r_i}{H(t)}\right)^3 \bullet \left[1 + 2 \bullet \left(\frac{H(t)}{r_i}\right)^2\right]$$

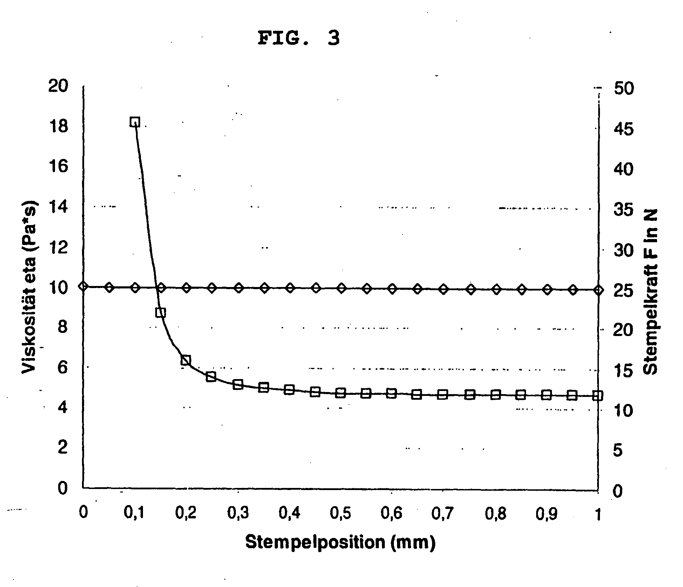

Die Summanden in K1(t) und K2(t), welche den aktuellen Abstand H(t) der Stirnfläche des Kolbens vom Verschlussstück enthalten, geben den Einfluss des "Squeeze Flow" wieder. Der in Fig. 3 beispielhaft für eine konstante Viskosität von 10 Pa*s ($v_s$ = 0,2 mm/s, $r_i$ = 7,75 mm, h = 0,25 mm, l = 5mm) berechnete Kraftverlauf F(H(t)) verdeutlicht, dass mit diesen Randbedingungen der Beitrag des "Squeeze Flow" zur Presskraft F für H (t) > 0,5 mm vernachlässigbar ist.

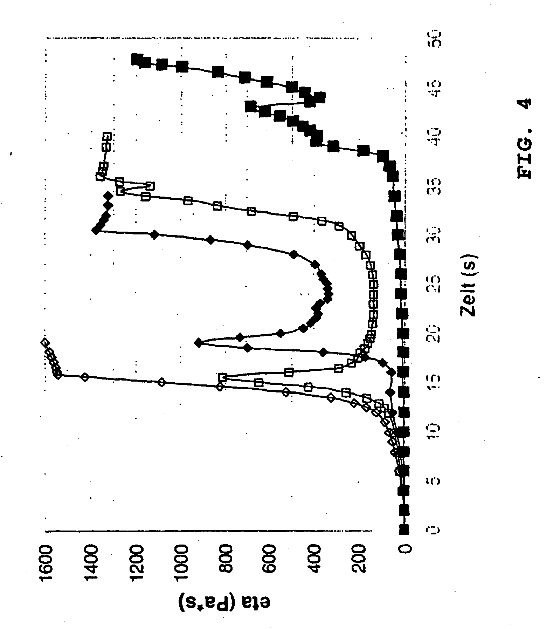

Die Fig. 4 zeigt den gemessenen Verlauf der Viskosität für eine Masse mit vier unterschiedlichen Vernetzungsgraden. Mit zunehmendem Vernetzungsgrad verschieben sich die Lage des Viskositätsminimums und der Steilanstieg der Viskosität (Gelzeit) zu kürzeren Zeiten. Die Höhe des Viskositätsminimums nimmt in der selben Reihenfolge zu.
Nach Abschluss der Messung wird die Antriebsstange 21 von dem Kolben 11 entfernt, das Thermoelement aus der Bohrung 20 zwischen Hülse 12 und Verschlussstück 13 zurückgezogen, und mit dem gabelförmigen Werkzeug der Kolben 11, die Hülse 12 und das Verschlussstück 13 aus dem beheizten Zylinder 17 entfernt. Nach dem Abkühlen wird das Verschlussstück 13 abgeschraubt, der Kolben 11 samt anhaftender Masse aus der Hülse 12 gedrückt, alle Teile mit einer Bürste gereinigt, bei Bedarf mit einem Formtrennmittel eingesprüht, die Teile erneut zusammengesetzt, wieder in den Zylinder 17 eingesetzt und für eine erneute Messung aufgeheizt.
Es ist zeitsparend, für die Messungen mit zwei Sätzen von Kolben 11, Hülse 12 und Verschlussstück 13 zu arbeiten, so dass, während ein Satz abkühlt, der andere bereits für die nächste Messung im Zylinder 17 aufgeheizt werden kann.

**Patentansprüche**

1. Rheometer (10) zur Messung der Fließeigenschaften von rasch härtenden Duroplastmassen, mit einer Hülse (12) zur beweglichen Führung eines Kolbens (11), wobei der Kolben (11) in seinem mittleren Bereich einen Abschnitt (11b) aufweist, dessen Durchmesser geringer ist als in den anderen Bereichen des Kolbens (11), wobei der Kolben (11) aus drei verschiedenartig ausgebildeten Abschnitten (11a, 11b, 11c) besteht, wobei der Kolben (11) in seinem oberen, einem Verschlussstück (13) der Hülse (12) abgewandten Bereich denzweiten, zylindrischen Abschnitt (11c) aufweist, wobei der zweite zylindrische Abschnitt (11c) des Kolbens und die Innenwand der Hülse (12) einen Ringspalt definierter Geometrie bilden, und wobei der dem Verschlussstück (13) zugewandte erste Abschnitt des Kolbens (11a) einen Durchmesser aufweist, der einen Ringspalt zwischen dem Abschnitt (11a) und der Hülse (12) zum Durchtritt des Materials ergibt, sodass eine Messung der Fließeigenschaften durch Anlegen einer konstanten Kraft F auf den Kolben unter Registrierung der sich dabei einstellenden momentanen Kolbengeschwindigkeit $v_s$ oder durch Anlegen einer geregelten Geschwindigkeit des Kolbens $v_s$ (t) unter Registrierung der hierfür notwendigen momentanen Kraft F (t) erfolgt.

2. Rheometer nach Anspruch 1, **dadurch gekennzeichnet, dass** der erste, dem Verschlussstück (13) der Hülse (12) zugewandte Abschnitt (11a) zylinderförmig ist.

3. Rheometer nach Anspruch 1, **dadurch gekennzeichnet, dass** die Gleitfläche des Kolbens (11) in der Hülse (12) im Bereich des zweiten zylindrischen Abschnitts (11c) zwei axiale Entlüftungsnuten (14) aufweist.

4. Rheometer nach einem der vorstehenden Ansprüche, **dadurch gekennzeichnet, dass** die Anordnung aus Kolben (11) und Hülse (12) zur Temperierung in die Innenbohrung eines Zylinders (17) einsetzbar ist.

## Claims

1. Rheometer (10) for measuring the flow properties of rapidly curing thermosetting compounds, comprising a casing (12) for guiding the motion of a piston (11), the piston (11) having in its middle region a section (11b) of a smaller diameter than in the other regions of the piston (11), the piston (11) being made up of three differently formed sections (11a, 11b, 11c), the piston (11) having the second, cylindrical section (11c) in its upper region, remote from a closure piece (13) of the casing (12), the second, cylindrical section (11c) of the piston and the inner wall of the casing (12) forming an annular gap of a defined geometry, and the first section of the piston (11a), towards the closure piece (13), having a diameter which produces an annular gap between the section (11a) and the casing (12) for the material to pass through, so that the flow properties are measured by applying a constant force F to the piston while registering the resultant momentary piston velocity $V_s$ or by applying a controlled velocity of the piston $v_s$ (t) while registering the momentary force F (t) necessary for this.

2. Rheometer according to Claim 1, **characterized in that** the first section (11a), towards the closure piece (13) of the casing (12), is cylindrical.

3. Rheometer according to Claim 1, **characterized in that** the sliding surface of the piston (11) in the casing (12) has two axial venting grooves (14) in the region of the second cylindrical section (11c).

4. Rheometer according to one of the preceding claims, **characterized in that** the arrangement comprising the piston (11) and the casing (12) can be used for controlling the temperature in the inner bore of a cylinder (17).

## Revendications

1. Rhéomètre (10) pour la mesure des propriétés d'écoulement de matières duroplastiques durcissant rapidement, comprenant un manchon (12) pour le guidage mobile d'un piston (11), le piston (11) présentant dans sa partie centrale une portion (11b) dont le diamètre est inférieur au diamètre dans les autres parties du piston (11), le piston (11) se composant de trois portions (11a, 11b, 11c) réalisées différemment, le piston (11) dans sa partie supérieure opposée à une pièce de fermeture (13) du manchon (12) présentant la deuxième portion cylindrique (11c), la deuxième portion cylindrique (11c) du piston et la paroi intérieure du manchon (12) formant une fente annulaire de géométrie définie, et la première portion du piston (11a) tournée vers la pièce de fermeture (13) présentant un diamètre qui résulte en une fente annulaire entre la portion (11a) et le manchon (12) pour permettre le passage de matière, de sorte qu'une mesure des propriétés d'écoulement ait lieu par application d'une force constante F sur le piston en enregistrant la vitesse du piston instantanée $v_s$ s'établissant dans ce cas ou par application d'une vitesse régulée du piston $v_s$ (t) en enregistrant la force F(t) instantanée nécessaire à cet effet.

2. Rhéomètre selon la revendication 1, **caractérisé en ce que** la première portion (11a) tournée vers la pièce de fermeture (13) du manchon (12) est de forme cylindrique.

3. Rhéomètre selon la revendication 1, **caractérisé en ce que** la surface de glissement du piston (11) dans le manchon (12) dans la région de la deuxième portion cylindrique (11c) présente deux rainures d'aération axiales (14).

4. Rhéomètre selon l'une quelconque des revendications précédentes, **caractérisé en ce que** l'agencement du piston (11) et du manchon (12) peut être utilisé pour réaliser l'équilibrage de la température dans l'alésage interne d'un cylindre (17).

FIG. 1

FIG. 2

# FIG. 3

EP 1 426 753 B1

EP 1 426 753 B1

FIG. 4

**EP 1 426 753 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3270553 A